# FASCICULE DE BREVET EUROPEEN

(11) **EP 3 462 524 B1**
(45) Date de publication et mention de la délivrance du brevet: **12.02.2020**
(21) Numéro de dépôt: 18197460.1
(22) Date de dépôt: 28.09.2018
(51) Int. Cl.: H01M 4/36, H01M 4/38, H01M 4/62, H01M 6/14

(54) **PILE A CATHODE LIQUIDE HYBRIDE**
BATTERIE MIT HYBRID-FLÜSSIGKATHODE
BATTERY WITH HYBRID LIQUID CATHODE

(30) Priorité: 29.09.2017 FR 1759133
(43) Date de publication de la demande: 03.04.2019
(73) Titulaire: Commissariat à l'énergie atomique et aux énergies alternatives, 75015 Paris (FR)
(72) Inventeur: MAYOUSSE, Eric, 38240 Meylan (FR); BLANC, Lionel, 38600 Fontaine (FR); CHAVILLON, Benoît, 38000 Grenoble (FR)
(74) Mandataire: Brevalex

(56) Documents cités:
- WO-A1-2016/128482
- FR-A1- 2 402 307
- FR-A1- 2 509 912
- FR-A1- 2 593 967

## Description

### DOMAINE TECHNIQUE

La présente invention a trait à une pile à cathode liquide spécifique et, plus précisément, à une pile à cathode liquide et à anode de calcium présentant une matrice cathodique du type hydride rendant l'utilisation de ces piles possibles à la fois à basse température (par exemple, à partir de -40 °C) et à haute température, par exemple, à des températures supérieures à 150 °C sans générer de problèmes de sécurité et pouvant délivrer également une tension dès la température ambiante.

La présente invention peut trouver application dans tous les domaines nécessitant la production d'énergie électrique, notamment dans des contextes où la température est particulièrement élevée, tel que cela est le cas des applications pétrolières comme le domaine du forage ou de la surveillance des puits en production ou encore de la géothermie.

Comme mentionné ci-dessus, les piles de l'invention reposent sur la technologie des piles à cathode liquide, ce qui signifie, en d'autres termes, qu'elles reposent sur la particularité que le composé actif utilisé à la cathode est un composé liquide et qui remplit, qui plus est, également le rôle de solvant de l'électrolyte, ce composé liquide imprégnant, classiquement, une matrice cathodique.

Un des modèles phares de ce type de pile est la pile lithium-chlorure de thionyle, qui se compose classiquement des éléments suivants :
- une électrode négative (ou anode) en lithium métallique, où se produit l'oxydation du lithium selon la réaction suivante :

   Li → Li⁺ + e⁻
- une électrode positive (ou cathode) comprenant, généralement, une matrice pouvant piéger le composé actif liquide, en l'occurrence, du chlorure de thionyle, qui est réduit selon la réaction suivante :

   2SOCl₂ + 4e⁻ → S + SO₂ + 4Cl⁻
- un électrolyte disposé entre ladite électrode négative et ladite électrode positive, lequel électrolyte comporte, comme solvant, du chlorure de thionyle, des sels et éventuellement un ou plusieurs additifs,
l'électrode négative et l'électrode positive étant reliées à un circuit extérieur, qui réceptionne le courant électrique produit *via* les électrodes susmentionnées.

En combinant la réaction électrochimique à l'électrode positive et la réaction électrochimique à l'électrode négative, la réaction globale (dite de décharge) peut être schématisée par l'équation suivante :

4Li + 2SOCl₂ → S + SO₂ (partiellement dissous) + 4LiCl (précipité)

les produits de la réaction étant ainsi du soufre, partiellement soluble dans l'électrolyte, du gaz SO₂, qui se solubilise partiellement dans l'électrolyte et un sel chlorure de lithium LiCl, qui précipite et forme un réseau continu dans la matrice carbonée constitutive de l'électrode positive. Le chlorure de lithium étant un matériau cristallin, il se réorganise progressivement dans la matrice, afin d'en occuper l'espace vide, la matrice constituant ainsi une zone de récupération des produits de réaction.

La matrice carbonée peut adopter l'une des formes suivantes :
- une matrice résultant d'une poudre comprimée, par exemple, une poudre de graphite et présentant une grande surface spécifique, telle que définie dans FR 2 166 015 ;
- une matrice carbonée, par exemple, en noir d'acétylène comprenant une dispersion de particules de cuivre, ladite matrice carbonée résultant de l'agglomération de poudres, comme décrite dans FR 2 402 307 ;
- une matrice carbonée composée d'un aérogel de carbone à grande surface spécifique, telle que décrite dans FR 2 872 347.

Dans WO 2016/128482, il décrit des piles à cathode liquide comprenant:
- une anode en calcium;
- un électrolyte comprenant un solvant oxydant soufré ou phosphoré et au moins un sel ;
- une cathode comprenant, comme matériau actif, un composé identique au solvant oxydant susmentionné ;
lesdites piles étant caractérisées en ce que le sel est un sel de strontium présent à une concentration allant de 1,15 mol.L⁻¹ à 3 mol.L⁻¹.

Concernant la cathode, il est précisé qu'elle comprend, classiquement, une matrice poreuse, par exemple, une matrice poreuse en un matériau carboné, qui permet d'accueillir le matériau actif de l'électrode, la matrice poreuse pouvant être, plus spécifiquement, un matériau carboné choisi parmi les noirs de carbone, les noirs d'acétylène, du graphite, les fibres de carbone et les mélanges de ceux-ci, en combinaison éventuellement avec un liant polymérique. Cette matrice poreuse peut être associée à un substrat collecteur de courant pouvant être en un matériau métallique (composé d'un seul élément métallique ou d'un alliage d'un élément métallique avec un autre élément métallique) se présentant, par exemple, sous forme d'une plaque, d'un feuillard ou d'une grille (telle qu'une grille de nickel).

Si, du point de vue de leurs caractéristiques électrochimiques, les piles Li/SOCl₂ présentent un certain nombre d'avantages (par exemple, une tension thermodynamique de 3,64 V par cellule en se basant sur la variation d'enthalpie libre due à la réaction globale de décharge susmentionnée; une énergie massique théorique élevée de 1470 Wh/kg (de l'ordre de 5273 kJ/kg) ; un phénomène d'autodécharge très faible (évalué à 1 % de perte de capacité par an à une température de 20 °C) ; une température de fonctionnement s'échelonnant de -60 °C (limitation imposée par l'électrolyte) à 180 °C (limitation imposée par le lithium métallique) ; une pression interne faible, du fait que les produits de réactions gazeux, tels que SO₂, sont solubles, en partie, dans l'électrolyte), ce système présente aussi un certain nombre d'inconvénients, en raison notamment de la réactivité du lithium métallique avec l'humidité de l'air ou de l'eau, pour former de l'hydrogène et de la lithine LiOH avec production de chaleur. Qui plus est, il se forme une couche de passivation à la surface du lithium (cette couche comprenant du LiCl), ce qui peut occasionner une chute de tension lors d'un appel de courant.

Enfin, comme suggéré ci-dessus, l'utilisation de ce système est théoriquement limitée à une température de 180 °C, point de fusion du lithium au-delà duquel des courts-circuits se produisent générant un emballement thermique et une surpression de la pile, pouvant conduire à sa destruction.

Aussi, à des températures allant au-delà de 180 °C, l'utilisation de telles piles n'est plus possible à cause de la fusion du lithium. Par ailleurs, l'utilisation de piles à anodes de lithium pose des problèmes de sécurité apparaissant lors de leur production, de leur transport, de leur utilisation voire de leur recyclage.

Pour pallier ces inconvénients, il a été proposé d'utiliser, comme matériau constitutif de l'électrode négative, un matériau à base d'un alliage de lithium avec un second métal qui présente un point de fusion supérieur à celui du lithium métallique seul, un alliage de ce type étant un alliage de lithium et de magnésium, tel que décrit notamment dans US 5,705,293, et plus spécifiquement, des alliages comportant une proportion de magnésium de 30 %, ce qui permet d'accéder à des températures d'utilisation de 200-220 °C. En effet, l'introduction de magnésium dans cette proportion induit un déplacement vers des valeurs plus élevées de température de fusion, comme l'atteste le diagramme de phase Li/Mg.

Toutefois, compte tenu de la forte résistance interne de ces piles comportant un tel alliage au niveau de l'électrode négative, il est nécessaire de les conditionner avant utilisation, ces opérations de conditionnement pouvant s'avérer contraignantes pour l'utilisateur. D'autre part, en cas de dépassement de la température de fusion de l'anode, ces piles peuvent présenter également des problèmes de sécurité.

A titre alternatif, il a également été proposé des piles plus sécuritaires que les piles au lithium, ces piles fonctionnant avec une anode, non plus en lithium, mais en calcium et une cathode à base de chlorure de thionyle, ce type de pile étant dénommée pile Ca/Chlorure de thionyle.

Ce type de pile se compose classiquement des éléments suivants :
- une électrode négative (ou anode) en calcium métallique, où se produit l'oxydation du calcium selon la réaction suivante :

   Ca → Ca²⁺ + 2e⁻
- une électrode positive (ou cathode) comprenant, également, une matrice pouvant piéger le composé actif liquide, en l'occurrence, du chlorure de thionyle, qui est réduit selon la réaction suivante :

   2 SOCl₂ + 4e⁻ → S + SO₂ + 4Cl⁻
- un électrolyte disposé entre ladite électrode négative et ladite électrode positive,
la réaction globale (dite de décharge) étant schématisée par l'équation suivante :

2 Ca + 2SOCl₂ → 2CaCl₂ + SO₂ + S

Le soufre et le dioxyde de soufre sont, en tout ou partie, solubles dans l'électrolyte, tandis que le chlorure de calcium CaCl₂ va également précipiter dans la matrice avec toutefois un comportement différent du chlorure de lithium LiCl.

En effet, du fait qu'un atome de calcium a une taille de 180 pm (comparativement à 145 pm pour le lithium) et que lors de sa chloration, un atome de calcium se lie à deux atomes de chlore au lieu d'un seul pour un atome de lithium, les molécules de chlorure de calcium CaCl₂ sont plus volumineuses que les molécules de chlorure de lithium. Qui plus est, le chlorure de calcium CaCl₂ est un solide amorphe au contraire du chlorure de lithium LiCl, qui est cristallin.

Ainsi, lors du dépôt du chlorure de calcium sur la matrice, il n'y aura pas de réorganisation de celui-ci au sein de la matrice du fait du son caractère amorphe et non conducteur électronique. Qui plus est, du fait de son volume plus important, il peut occasionner :
- un dépôt uniquement à la surface de la matrice (et non dans sa porosité), ce qui peut occasionner une forte résistance à la réaction de décharge de la pile et provoquer à terme son arrêt ;
- ou alors si le dépôt s'effectue dans les pores de la matrice, un colmatage de cette dernière, ce qui peut empêcher le catholyte de circuler, voire ce qui peut occasionner l'emprisonnement d'une partie du catholyte au sein de la matrice, le rendant ainsi indisponible pour les réactions ultérieures.

D'autre part, le calcium permet un fonctionnement à des températures plus élevées qu'avec le lithium, ces températures plus élevées contribuant à exacerber les phénomènes susmentionnés. Aussi, une matrice fonctionnant correctement à température ambiante pourrait voir son rendement fortement réduit aux températures élevées praticables avec le calcium, car elle ne possèderait plus un réseau de pores d'un diamètre d'entrée ou d'un volume suffisant à l'accueil des molécules de CaCl₂ issues des réactions de la pile.

Par ailleurs, si le démarrage d'une décharge de pile se produit à température ambiante, la problématique existant pour ces températures faibles est la question de la tension de décharge, qui est extrêmement faible et qui n'est pas intéressante pour la plupart des applications.

Au regard de ce qui existe, les auteurs de la présente invention se sont fixé pour objectif de mettre en place un nouveau type de pile à cathode liquide et anode au calcium, et plus spécifiquement une pile à cathode liquide permettant un fonctionnement efficace en termes de tension délivrée (notamment, supérieure à 2,5 V) tant à basses températures (par exemple, à partir de -40 °C) qu'à hautes températures (par exemple, supérieures à 200 °C).

### EXPOSÉ DE L'INVENTION

Aussi, l'invention a trait à une pile à cathode liquide comprenant :
- une anode en calcium ;
- un électrolyte comprenant un solvant oxydant soufré et/ou phosphoré et au moins un sel ;
- une cathode comprenant, comme matériau actif, un composé identique au solvant oxydant susmentionné;
caractérisée en ce que la cathode comprend une première zone consistant en une matrice comprenant des fibres de carbone enchevêtrées présentant une porosité d'au moins 90 % et une surface spécifique inférieure ou égale à 5 m²/g et comprend une deuxième zone distincte de la première zone, ladite deuxième zone consistant en un matériau composite comprenant un liant et du noir de carbone.

Ainsi, les piles de l'invention comportent une cathode de structure hybride, qui va pouvoir fonctionner efficacement à hautes températures grâce à la présence de la première zone et également à basses températures grâce à la présence de la deuxième zone. En d'autres termes, les piles de l'invention, grâce à cette cathode, sont aptes à fonctionner efficacement sur une large gamme de températures, par exemple, allant de -40 °C à 300 °C.

Avant d'entrer plus en détail dans l'exposé de l'invention, nous précisons les définitions suivantes.

Par cathode, on entend, classiquement, dans ce qui précède et ce qui suit, l'électrode qui est le siège d'une réaction de réduction, en l'occurrence, ici, la réduction du matériau actif liquide, quand la pile débite du courant, c'est-à-dire lorsqu'elle est en processus de décharge. La cathode peut être également qualifiée d'électrode positive.

Par anode, on entend, classiquement, dans ce qui précède et ce qui suit, l'électrode qui est le siège d'une réaction d'oxydation, quand la pile débite du courant, c'est-à-dire lorsqu'il est en processus de décharge. L'anode peut être également qualifiée d'électrode négative.

Par matériau actif, on entend, classiquement, dans ce qui précède et ce qui suit, le matériau qui est directement impliqué dans la réaction de réduction se déroulant au niveau de la cathode, le matériau actif dans le cadre de l'invention étant un matériau actif liquide de même nature que le solvant oxydant soufré et/ou phosphoré constitutif de l'électrolyte.

Comme indiqué ci-dessus, la cathode des piles conformes à l'invention comporte, comme première zone, une matrice carbonée spécifique, qui permet d'accueillir ledit matériau actif et également de récupérer les produits de réaction de la pile comme CaCl₂.

Cette matrice carbonée comprend des fibres de carbone enchevêtrées, et encore plus spécifiquement est composée majoritairement voire exclusivement de fibres de carbone enchevêtrées. Ces fibres de carbone peuvent présenter, avantageusement, une longueur inférieure à 20 mm et un diamètre inférieur à 15 µm. De manière spécifique, la matrice carbonée peut se présenter sous la forme d'un voile de fibres de carbone.

En outre, la matrice carbonée présente une porosité au moins égale à 90 %, de préférence supérieure ou égale à 92 %, par exemple de 92 % à 98 %, ou encore supérieure à 95 % et présente une surface spécifique inférieure ou égale à 5 m²/g, par exemple de 0,5 à 5 m²/g, ou encore inférieure à 1 m²/g.

On précise que la porosité correspond au volume de vide de la matrice par rapport à son volume total. Pour procéder à sa mesure, la matrice, dont la quantité et les caractéristiques géométriques (longueur, largeur et épaisseur) sont connues, est placée dans un volume initial donné d'électrolyte. Puis il est procédé à la mesure de la différence entre le volume d'électrolyte après immersion de la matrice et le volume initial d'électrolyte, cette différence correspond au volume de vide de la matrice. La porosité en est déduite en faisant le rapport du volume de vide sur le volume total de la matrice.

On précise que la surface spécifique est mesurée par la méthode BET mise en œuvre avec un appareil Micromeritics Tristar II-Surface Area and Porosity, cette méthode étant décrite dans Journal of the American Chemical Society, p. 309 (60), 1938.

En alliant une forte porosité à une faible surface spécifique, il est ainsi possible de surmonter les inconvénients mentionnés ci-dessus, à savoir les dépôts de CaCl₂ intervenant à la surface de la matrice et dans la porosité, pouvant engendrer un colmatage de celle-ci et d'assurer une durée de vie de la pile plus longue pour des fonctionnements à basses, moyennes et hautes températures.

Enfin, la matrice carbonée peut également répondre à l'une ou plusieurs des caractéristiques suivantes :
- un grammage inférieur ou égal à 20 g/m² ;
- lorsque la matrice se présente sous forme d'une plaque, une épaisseur inférieure à 1 mm, de préférence inférieure à 0,5 mm ;
- la matrice carbonée est dénuée de liant, tel que du liant polymérique comme le polytétrafluoroéthylène pour assurer la tenue mécanique.

Concernant le grammage, il est déterminé par la mesure de la masse de matrice, la valeur de la masse étant ramenée à la surface en m² de ladite matrice. Du fait que ce grammage est, avantageusement, inférieur ou égal à 20 g/m², ceci induit un gain sur la masse de la matrice et donc du système électrochimique dans lequel est introduite ladite matrice et, par conséquent, une augmentation de la densité d'énergie massique dudit système.

Enfin, cette matrice carbonée est avantageusement autosupportée. Par matrice autosupportée, on entend une matrice qui se tient d'elle-même, en d'autres termes, qui n'a pas besoin d'être apposée sur un support, par exemple, sur une grille ou un feuillard métallique, pour assurer sa tenue mécanique.

En outre, pour la reprise de courant, la matrice peut être munie d'une ou plusieurs pièces métalliques, par exemple, sous forme de languettes (tel que des pièces métalliques en nickel) fixée(s) à l'une des faces de la matrice par simple soudure.

La cathode comprend également une deuxième zone distincte de la première zone, ladite deuxième zone consistant en un matériau composite comprenant un liant et du noir de carbone.

Concernant le noir de carbone, il peut s'agir, en particulier, de noir d'acétylène, qui correspond à un noir de carbone obtenu par craquage d'acétylène à des températures très élevées (par exemple, des températures de plus de 2000 °C) et présente l'avantage de présenter un caractère conducteur marqué.

Concernant le liant, il peut être un liant polymérique qui forme une matrice pour le noir de carbone (qui constitue ainsi une charge) et, plus spécifiquement, il peut être un liant polymérique appartenant à la catégorie des liants polymériques éthyléniques fluorés, tel que du polytétrafluoroéthylène (connu sous l'abréviation PTFE), le polyfluorure de vinylidène (connu sous l'abréviation PVDF) et/ou des copolymères éthyléniques fluorés (tels que les copolymères de fluorure de vinylidène et d'hexafluoropropylène).

Ce liant peut représenter de 3 à 30 % en masse par rapport à la masse totale du matériau composite.

Cette deuxième zone peut être déposée sur un collecteur de courant, ce dernier consistant, par exemple, en un feuillard ou une grille métallique, qui peut présenter une épaisseur allant de 10 à 500 µm. Dans ce cas de figure, cette deuxième zone peut n'être déposée que sur une partie d'une des faces du collecteur de courant.

Par exemple, cette deuxième zone peut se présenter sous forme d'une ou plusieurs couches présentant une épaisseur allant de 0,5 à 5 mm, de préférence, de 0,5 à 2 mm, notamment dans le cas d'une pile présentant un format C. Lorsque la deuxième zone se compose de plusieurs couches, celles-ci peuvent se présenter sous forme de couches séparées déposées sur un collecteur de courant (par exemple, sous forme de bandelettes parallèles empâtées sur l'une des faces d'un collecteur de courant se présentant, par exemple, sous forme d'une grille).

La première zone et la deuxième zone sont, avantageusement, en contact l'une de l'autre.

Par exemple, selon un premier mode de réalisation, lorsque la deuxième zone consiste en une deuxième zone déposée sur un collecteur de courant, le contact entre la première zone et la deuxième zone peut s'établir *via* la face du collecteur du courant sur laquelle est déposée la deuxième zone.

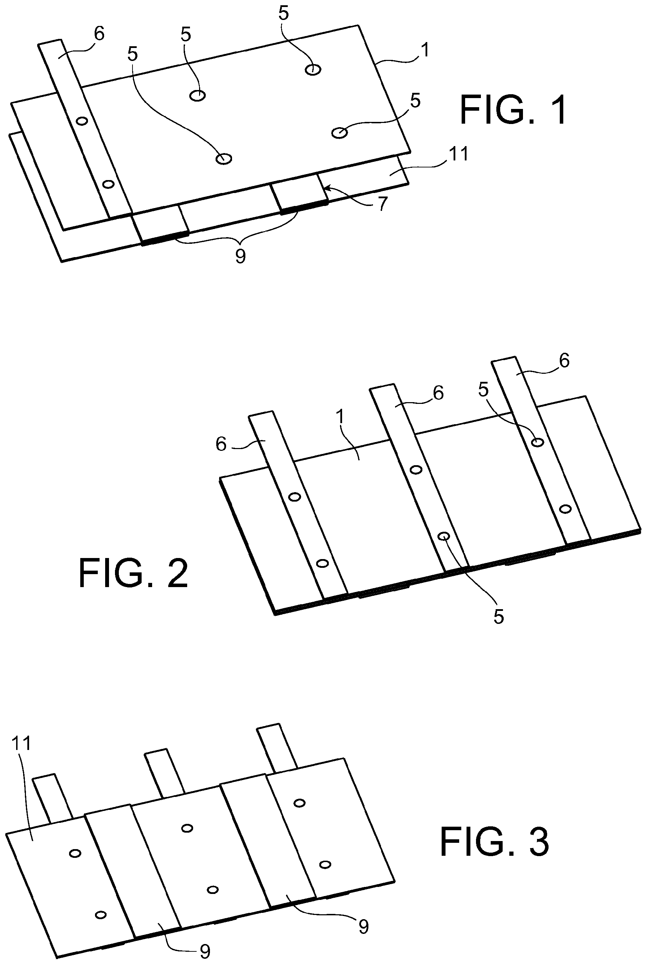

Les figures 1 à 3 illustrent des vues d'une électrode positive hybride entrant dans la constitution d'une pile conforme à l'invention, la figure 1 illustrant une vue éclatée de l'électrode positive et les figures 2 et 3 illustrant respectivement une vue recto et une vue verso de l'électrode positive assemblée.

L'électrode positive ainsi représentée comprend respectivement :
- une première zone 1 constituée d'un voile de fibres de carbone répondant aux spécificités de l'invention et présentant une forme parallélépipédique, ladite première zone présentant, avant assemblage, des trous 5, qui permettent d'une part la connexion par soudure avec la deuxième zone sous-jacente et d'autre part la connexion par soudure avec des collecteurs de courant (lesdits trous se trouvent ainsi, après assemblage, comblé par un matériau de soudure) ;
- des collecteurs de courant sous forme de languettes 6 ou de pattes métalliques de reprise de courant (par exemple, en nickel et d'épaisseur 5 mm) et soudés à la première zone via lesdits trous 5, lesdites pattes étant disposées perpendiculairement à la première zone et parallèlement entre elles avec un espacement pouvant aller de 20 à 50 mm ;
- une deuxième zone 7 formée de couches 9 d'un matériau composite comprenant un liant et du noir de carbone empâtées sur une grille 11 formant un collecteur de courant (ladite grille pouvant être une grille de nickel expansé).

La première zone est ainsi maintenue entre la grille porteuse de la deuxième zone et les collecteurs de courant sous forme de languettes.

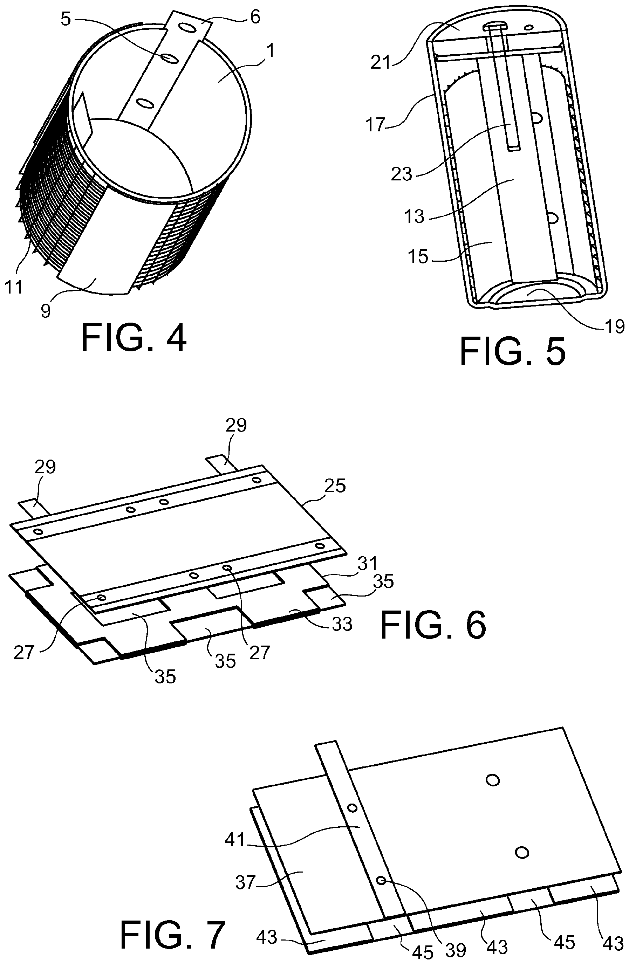

D'autres configurations d'électrodes positives hybrides sont illustrées sur les figures 6 et 7 jointes en annexe.

Plus spécifiquement, sur la figure 6, l'électrode positive ainsi représentée comprend respectivement :
- une première zone 25 constituée d'un voile de fibres de carbone répondant aux spécificités de l'invention et présentant une forme parallélépipédique, ladite première zone présentant, avant assemblage, des trous 27, qui permettent, pour une partie d'entre eux la connexion par soudure avec deux collecteurs de courant et pour l'autre partie d'entre eux la connexion par soudure avec la deuxième zone sous-jacente (lesdits trous se trouvent ainsi, après assemblage, comblé par un matériau de soudure) ;
- des collecteurs de courant sous forme de deux languettes 29 et soudés à la première zone via certains desdits trous 27, lesdites languettes étant disposées perpendiculairement à la première zone et parallèlement entre elles avec un espacement pouvant aller de 20 à 50 mm ;
- une deuxième zone 31 formée d'une couche 33 d'un matériau composite comprenant un liant et du noir de carbone empâtées sur une grille 35 formant un collecteur de courant (ladite grille pouvant être une grille de nickel expansé), ladite couche laissant des zones inoccupées 35 aux coins de la grille, sur son pourtour et dans sa partie centrale.

Sur la figure 7, l'électrode positive ainsi représentée comprend respectivement :
- une première zone 37 constituée d'un voile de fibres de carbone répondant aux spécificités de l'invention et présentant une forme parallélépipédique, ladite première zone présentant, avant assemblage, des trous (4 au total) 39, qui permettent d'une part la connexion par soudure avec la deuxième zone sous-jacente et d'autre part la connexion par soudure avec des collecteurs de courant (lesdits trous se trouvent ainsi, après assemblage, comblé par un matériau de soudure) ;
- deux collecteurs de courant sous forme de deux languettes 41 soudées à la première zone via lesdits trous 39, lesdites languettes étant disposées perpendiculairement à la première zone et parallèlement entre elles ;
- une deuxième zone 43 formée de trois couches d'un matériau composite comprenant un liant et du noir de carbone empâtées sur une grille 45 formant un collecteur de courant (ladite grille pouvant être une grille de nickel expansé), dont deux couches sont situées aux deux extrémités de la grille et la dernière couche est située sur la partie médiane de la grille.

Selon un deuxième mode de réalisation, le contact peut être établi par le fait que le matériau composite constitutif de la deuxième zone est directement déposé sur une partie de la surface de la première zone. Dans ce cas, la deuxième zone peut présenter une surface correspondant à une valeur de 10 à 50 % de la surface de la première zone.

L'anode est, quant à elle, une anode en calcium (c'est-à-dire une anode exclusivement composée de calcium). Le calcium présente l'avantage d'avoir un point de fusion élevé (de l'ordre de 842 °C). De plus, le calcium présente une capacité volumique de 2,06 Ah/cm³ égale à celle du lithium. Ceci permet, à volume égal, d'introduire la même capacité en calcium dans une pile.

Comme mentionné ci-dessus, l'électrolyte comprend un solvant oxydant soufré et/ou phosphoré et au moins un sel, ce solvant oxydant soufré et/ou phosphoré constituant également le matériau actif de la cathode.

Plus spécifiquement, le solvant oxydant peut être :
- un solvant soufré, comprenant un ou plusieurs atomes de chlore, tel qu'un solvant choisi parmi le chlorure de thionyle (SOCl₂), le chlorure de sulfuryle (SO₂Cl₂), le dichlorure de disoufre (S₂Cl₂), le dichlorure de soufre (SCl₂) ;
- un solvant soufré non chloré, tel que le dioxyde de soufre (SO₂) ; ou
- un solvant phosphoré et éventuellement soufré comprenant un ou plusieurs atomes de chlore, tel que le trichlorure de phosphoryle (POCl₃), le trichlorure de thiophosphoryle (PSCl₃).

De préférence, le solvant oxydant est du chlorure de thionyle (SOCl₂).

Le sel présent dans l'électrolyte peut résulter de la réaction d'un acide de Lewis et d'une base de Lewis, cette réaction pouvant avoir lieu *ex situ,* c'est-à-dire avant l'introduction dans la pile ou *in situ,* c'est-à-dire au sein de la pile, lorsque l'acide de Lewis et la base de Lewis correspondants sont introduits dans la pile.

Plus précisément, le sel peut être réalisé par réaction :
- d'une base de Lewis de formule A¹X₂, dans laquelle X représente un atome d'halogène, tel qu'un atome de chlore, un atome de brome, un atome de fluor, un atome d'iode, et A¹ représente un élément divalent, tel qu'un élément alcalino-terreux comme Ca et Sr, de formule A²X, dans laquelle X est tel que défini ci-dessus et A² représente un élément monovalent, tel qu'un élément alcalin comme Na, Li ou un groupe ammonium NH₄⁺, de formule A³X₃, dans laquelle X est tel que défini ci-dessus et A³ représente un élément trivalent tel que Ba ; et
- d'un acide de Lewis choisi parmi un halogénure d'aluminium AlX₃, un halogénure de gallium GaX₃, un halogénure de bore BX₃, un halogénure d'indium InX₃, un halogénure de vanadium VX₃, un halogénure de silicium SiX₄, un halogénure de niobium NbX₅, un halogénure de tantale TaX₅, un halogénure de tungstène WX₅, un halogénure de bismuth BiX₃, des borohydrures, des chloroborates et les mélanges de ceux-ci, X représentant, comme ci-dessus, un atome d'halogène tel qu'un atome de brome, un atome de chlore, un atome de fluor et un atome d'iode.

De préférence, l'acide de Lewis est (AlCl₃) ou (GaCl₃) et la base de Lewis est SrCl₂, notamment lorsque le solvant oxydant utilisé est le chlorure de thionyle.

Outre la présence d'un solvant et d'un sel tel que défini ci-dessus, l'électrolyte peut comprendre un ou plusieurs additifs choisis, par exemple, pour limiter l'autodécharge des piles et la corrosion en décharge.

Ce et ces additifs peuvent être choisis parmi l'acide fluorhydrique HF, SO₂, des sels tels que GaCl₃, BiCl₃, BCl₃, GaCl₃, InCl₃, VCl₃, SiCl₄, NbCl₅, TaCl₅, PCl₅ et WCl₆.

Ce et ces additifs peuvent être présents en une teneur allant de 0 à 50 % de la concentration du sel.

Les piles de l'invention peuvent être développées selon différentes technologies et, en particulier, selon deux technologies de pile cylindriques, qui sont les piles de structure dite à électrodes coaxiales et les piles de structure dite à électrodes spiralées, ces piles pouvant être de différents formats (tels que les formats AAA, AA, C, D ou DD).

Pour les piles de structure dite à électrodes spiralées, elles comportent, classiquement, deux électrodes planes rectangulaires dont la largeur doit être compatible avec la hauteur du godet et présentant, une longueur configurée pour que, une fois enroulées sur elles-mêmes, elles constituent un cylindre dont le diamètre permet son introduction dans le godet destiné à accueillir ces électrodes.

Pour les piles de structure dite à électrodes coaxiales, il peut s'agir, en particulier, d'une pile pour laquelle la cathode forme une enveloppe autour de l'anode, l'enveloppe constituée de la cathode n'étant pas en contact avec l'anode mais étant séparée de celle-ci par un espace inter-électrodes comprenant l'électrolyte. Encore plus spécifiquement, l'anode peut se présenter, avantageusement, sous forme d'un cylindre en calcium, ledit cylindre étant, avantageusement, un cylindre plein, tandis que la cathode, qui est disposée autour de l'anode, se présente, avantageusement, sous forme d'une enveloppe cylindrique présentant, avantageusement, le même axe de révolution que le cylindre de calcium, étant entendu que le cylindre de calcium et l'enveloppe cylindrique constitutive de la cathode ne sont pas en contact l'un de l'autre, mais sont séparés par un espace inter-électrodes comprenant l'électrolyte. Un exemple d'une telle configuration est illustrée sur la figure 5 jointe en annexe et décrite précisément dans l'exemple 1 exposé ci-dessous.

Comme mentionné ci-dessus, les piles de l'invention trouvent leur application dans tous les domaines nécessitant la production d'énergie électrique, dans une large gamme de températures grâce à la structure hybride de la cathode et, notamment dans des contextes où la température est élevée (notamment, des températures supérieures à 200 °C), ce qui est le cas notamment, dans la prospection et l'exploitation du pétrole ou encore dans les forages destinés à l'utilisation de la géothermie. Dans ces domaines, les piles de l'invention peuvent ainsi servir à l'alimentation électrique des systèmes de mesure, qui comportent déjà des composants électroniques permettant un fonctionnement à de telles températures.

L'invention va, à présent, être décrite en référence aux modes de réalisation particuliers définis ci-dessous et en référence aux figures annexées.

### BREVE DESCRIPTION DES FIGURES

Les figures 1 à 3 représentent des vues d'une électrode positive hybride susceptible d'entrer dans la constitution d'une pile conforme à l'invention.
Le figure 4 représente une vue d'une électrode positive hybride entrant dans la constitution d'une pile de géométrie cylindrique conforme à l'invention et illustrée à l'exemple 1.
La figure 5 représente une vue en coupe d'une pile conforme à l'invention et définie à l'exemple 1.
Les figures 6 et 7 représentent des vues d'une électrode positive hybride susceptible d'entrer dans la constitution d'une pile conforme à l'invention.
La figure 8 est une courbe illustrant l'évolution de la tension de pile U (en V) en fonction du temps (en s) à courant constant (20 mA) et à 20 °C (respectivement courbe en trait plein pour la pile conforme à l'invention et courbe en pointillés pour la pile non conforme à l'invention).
La figure 9 est une courbe illustrant l'évolution de la tension de pile U (en mV) en fonction du temps (en h) à courant constant (10 mA) et à 20 °C (respectivement courbe en trait plein pour la pile non conforme à l'invention et courbe en pointillés pour la pile conforme à l'invention).
La figure 10 est une courbe illustrant l'évolution de la tension de pile U (en mV) en fonction du temps t (en h) à courant constant (10 mA) et à 220 °C (respectivement courbe en trait plein pour la pile conforme à l'invention et courbe en pointillés pour la pile non conforme à l'invention).
La figure 11 est une courbe illustrant l'évolution de la tension de cellule U (en mV) en fonction de la charge Q (en mAh) pour des expériences exposées à l'exemple 4.
La figure 12 est une courbe illustrant l'évolution de la tension de cellule U (en mV) en fonction de la charge Q (en mAh) pour des expériences exposées à l'exemple 4.
La figure 13 est une courbe illustrant l'évolution de la tension de cellule U (en mV) en fonction de la charge Q (en mAh) pour des expériences exposées à l'exemple 4.

### EXPOSÉ DÉTAILLÉ DE MODES DE RÉALISATION PARTICULIERS

### EXEMPLE 1

Le but de cet exemple est de démontrer les performances d'une pile conforme à l'invention en termes de décharge à température ambiante (20 °C) en comparaison d'une pile non conforme à l'invention.

Pour la pile conforme à l'invention, l'électrode positive utilisée est celle représentée sur la figure 1 avant assemblage dans une pile, cette électrode comprenant les éléments suivants :
- une première zone 1 constituée d'un voile de fibres de carbone présentant une porosité de 95 %, une épaisseur de 200 µm, une surface spécifique de 2,5 m²/g et présentant une forme parallélépipédique, ladite première zone présentant, avant assemblage avec la deuxième zone, des trous 5, qui permettent d'une part la connexion par soudure avec la deuxième zone sous-jacente et d'autre part la connexion par soudure avec des collecteurs de courant (lesdits trous se trouvent ainsi, après assemblage, comblés par un matériau de soudure) ;
- des collecteurs de courant au nombre de trois sous forme de languettes 6 en nickel et présentant une largeur de 5 mm et une longueur de 45 mm et soudés à la première zone *via* lesdits trous 5, lesdites languettes étant disposées perpendiculairement à la première zone et parallèlement entre elles avec un espacement de 15 mm ;
- une deuxième zone 7 formée de couches 9 sous forme de deux bandeaux de 7 mm de largeur d'un matériau composite (comprenant 25 % en masse de polyfluorure de vinylidène (Teflon ®), 37,5 % en masse de noir d'acétylène Y50A et 37,5% en masse de noir d'acétylène YS) empâtées sur une grille de nickel expansé 11 de 300 µm d'épaisseur formant un collecteur de courant.

La première zone est ainsi maintenue entre la grille porteuse de la deuxième zone et les languettes de connexion électrique.

La deuxième zone susmentionnée est réalisée en recouvrant initialement la grille de nickel expansé par le matériau composite susmentionné puis en grattant ledit matériau de sorte à ne laisser subsister que les couches 9 (ce qui correspond à un grattage de 70 % de la surface initialement recouverte).

Juste avant l'incorporation dans une pile de structure dite à électrodes coaxiales (format C), les deux extrémités de l'électrode positive sont mises bout à bout et en contact l'une de l'autre de sorte à former un cylindre (40 mm de hauteur, 20 mm de diamètre) illustré sur la figure 4 jointe en annexe, les références numériques apposées sur cette figure étant identiques à celles des figures 1 à 3, dans la mesure où elles désignent les mêmes éléments.

La pile conforme à l'invention et illustrée sur la figure 5 jointe en annexe comprend plus spécifiquement les éléments suivants :
- une électrode négative 13 ou anode cylindrique pleine en calcium placée au centre de la pile et présentant une hauteur de 42 mm et un diamètre de 9 mm ;
- une électrode positive cylindrique 15 définie ci-dessus formant une enveloppe autour de l'anode sans contact avec elle ;
- entre l'électrode positive et l'électrode négative, un espace inter-électrodes comprenant un électrolyte (1,5 M de Sr(AlCl₄)₂ + 1,25 M SO₂ dans du chlorure de thionyle SOCl₂) imprégnant un séparateur constitué d'un tissé de fibres de verre présentant une épaisseur de 150 µm d'épaisseur, une hauteur de 45 mm et une largeur de 70 mm ;
- une enveloppe cylindrique 17 en Inox 305 formant le pôle positif de la pile et présentant une épaisseur de 0,9 mm, un diamètre interne de 22,9 mm et une hauteur de 51 mm, formant une enveloppe autour la cathode en contact direct avec elle *via* sa surface cylindrique interne et présentant deux faces planes parallèles formant les deux extrémités de l'enveloppe, la face plane inférieure 19 formant une même pièce avec la surface cylindrique et la face plane supérieure 21 étant constituée par une pièce en verre et en métal soudée à la surface cylindrique ;
lesdites anode, cathode et enveloppe présentant le même axe de révolution,
ladite anode étant munie sur sa face plane supérieure d'un trou cylindrique présentant un diamètre de 1,9 mm et une hauteur de 15 mm, ledit trou étant placé au centre de ladite face, dans lequel est fichée, par une de ses extrémités , une tige métallique 23 en Inox 304L (formant le pôle négatif de la pile) et présentant un diamètre de 2 mm pour une longueur de 40 mm formant collecteur de courant, l'autre extrémité de cette tige métallique étant emboîtée au niveau de la pièce en verre et en métal constituant la face place supérieure de l'enveloppe cylindrique.

La pile non conforme à l'invention est de structure similaire à celle de l'invention, si ce n'est que l'électrode positive consiste uniquement en une matrice carbonée constituée d'un voile de fibres de carbone présentant une épaisseur de 200 µm, une hauteur de 40 mm et une longueur de 70 mm.

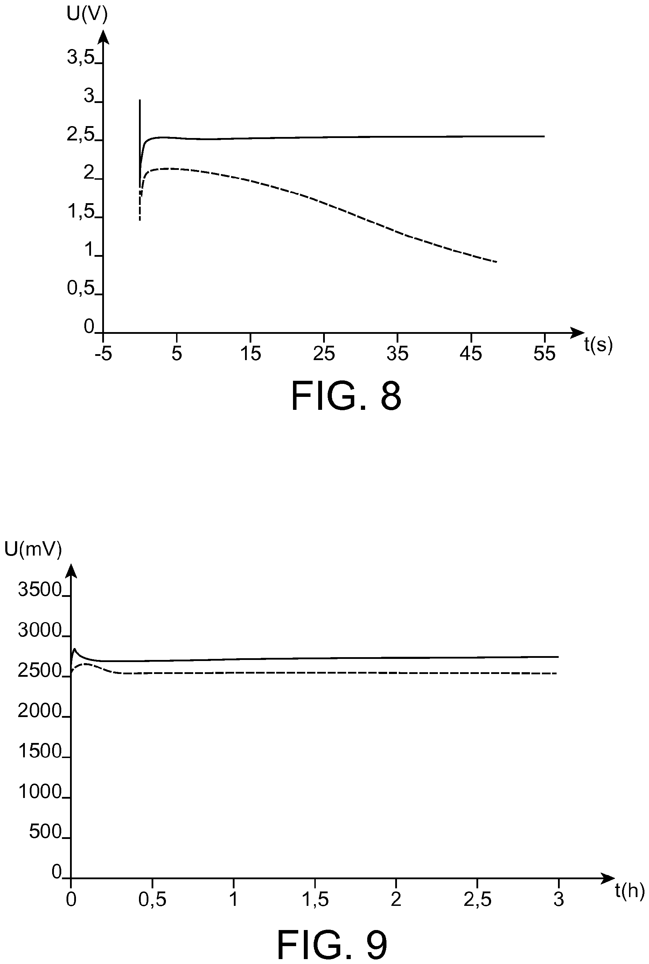

Pour ces deux piles, il est déterminé la courbe illustrant l'évolution de la tension de pile U (en V) en fonction du temps (en s) à courant constant (20 mA) et à 20 °C (sur la figure 8, respectivement courbe en trait plein pour la pile conforme à l'invention et courbe en pointillés pour la pile non conforme à l'invention).

La tension de cellule lors des premiers instants de l'appel de courant chute plus fortement pour la pile non conforme à l'invention que pour la pile conforme à l'invention. De plus, la tension se stabilise dans le temps pour la pile conforme à l'invention à une valeur supérieure à 2,5 V alors qu'elle chute rapidement pour la pile non conforme à l'invention.

### EXEMPLE 2

Cet exemple est similaire à l'exemple 1, si ce n'est que l'expérience est réalisée à 20 °C sous 10 mA et dans lequel la pile non conforme à l'invention comporte une électrode positive comprenant une grille de nickel expansé de 300 µm d'épaisseur empâtée avec un matériau composite comprenant 25 % en masse de polyfluorure de vinylidène (Teflon ®), 37,5 % en masse de noir d'acétylène Y50A et 37,5 % en masse de noir d'acétylène YS. Ici la pile utilisant l'électrode empâtée a l'électrode positive reliée au pion (pôle positif). L'électrode positive a une épaisseur de 2,6 mm, une hauteur de 30 mm et une largeur de 40 mm. L'électrode est grattée sur 10 mm sur toute la hauteur à une extrémité et une connexion de nickel de 5 mm de large et de 45 mm de long est soudée sur la grille de nickel et connectée au pion de la traversée verre-métal.

La courbe illustrant l'évolution de la tension de pile U (en mV) en fonction du temps (en h) à courant constant (10 mA) et à 20 °C (respectivement courbe en trait plein pour la pile non conforme à l'invention et courbe en pointillés pour la pile conforme à l'invention), est représentée sur la figure 9.

Il ressort de cette figure un bon comportement de l'électrode positive hybride dans le cas d'une décharge à 20 °C et, en particulier, la possibilité de pouvoir effectuer quelques heures de décharge à une tension supérieure à 2,5 V sous 10 mA à 20 °C. Ces valeurs sont proches de ce qui est obtenu avec la pile non conforme à l'invention (avec une électrode positive standard de noir d'acétylène empâté sur une grille de nickel).

### EXEMPLE 3

Cet exemple est similaire à l'exemple 1, si ce n'est que l'expérience est réalisée à 10 mA et à 220 °C.

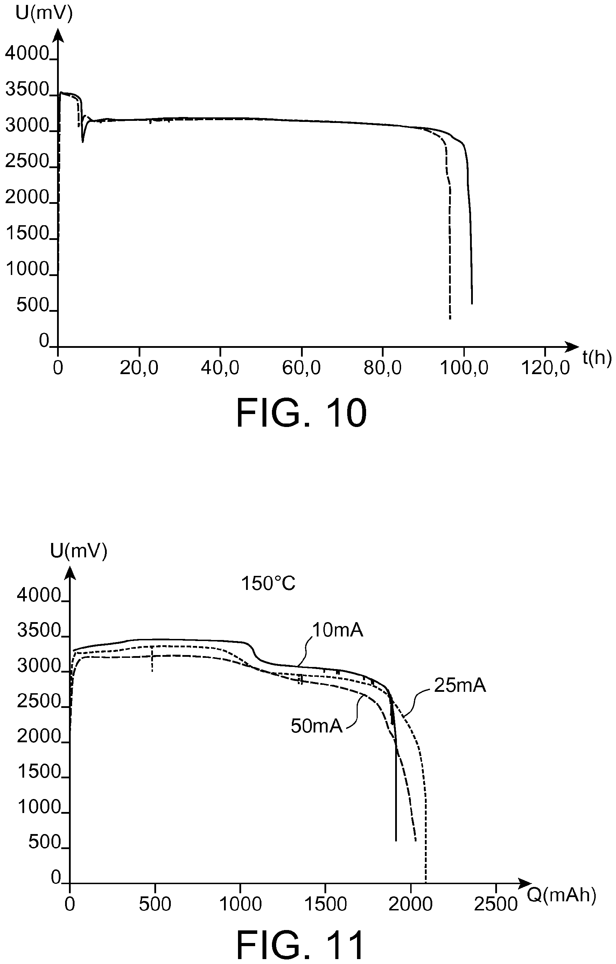

La courbe illustrant l'évolution de la tension de pile U (en mV) en fonction du temps (en h) à courant constant (10 mA) et à 220 °C (respectivement courbe en trait plein pour la pile conforme à l'invention et courbe en pointillés pour la pile non conforme à l'invention), est représentée sur la figure 10.

Il ressort, de cette figure, que, par rapport à une pile comportant une électrode positive uniquement constituée d'un voile de carbone, la pile conforme à l'invention présente des propriétés parfaitement similaires à haute température, ce qui démontre que le caractère hybride de l'électrode positive n'influe pas négativement sur les propriétés de la pile à hautes températures.

### EXEMPLE 4

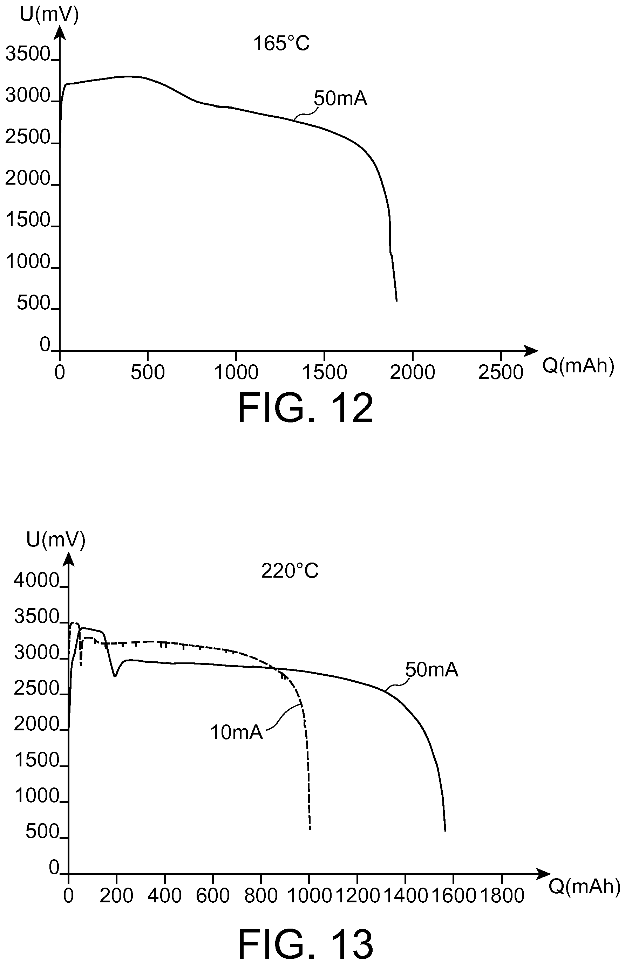

Dans cet exemple, il est procédé à différentes expériences de décharges avec une pile conforme à l'invention telle que définie à l'exemple 1 :
- lors d'une première série d'essais, des essais à 150 °C à des courants constants de 10 mA, 25 mA et 50 mA, les résultats étant reportés sur la figure 11, qui est une courbe illustrant l'évolution de la tension de cellule U (en mV) en fonction de la charge Q (en mAh) ;
- lors d'un deuxième essai, un essai à 165 °C à un courant constant de 50 mA, les résultats étant reportés sur la figure 12, qui est une courbe illustrant l'évolution de la tension de cellule U (en mV) en fonction de la charge Q (en mAh) ;
- lors d'une troisième série d'essais, des essais à 220 °C à des courants constants de 50 mA et de 10 mA, les résultats étant reportés sur la figure 13, qui est une courbe illustrant l'évolution de la tension de cellule U (en mV) en fonction de la charge Q (en mAh).

Il ressort de ces essais que les piles conformes à l'invention peuvent fonctionner à hautes températures (supérieures à 150 °C) et sous différents régimes tout en délivrant de bonnes performances et notamment dans des conditions où le lithium ne pourrait être utilisé.

## Revendications

1. Pile à cathode liquide comprenant :
- une anode en calcium ;
- un électrolyte comprenant un solvant oxydant soufré et/ou phosphoré et au moins un sel ;
- une cathode comprenant, comme matériau actif, un composé identique au solvant oxydant susmentionné;
**caractérisée en ce que** la cathode comprend une première zone consistant en une matrice carbonée comprenant des fibres de carbone enchevêtrées présentant une porosité d'au moins 90 % et une surface spécifique inférieure ou égale à 5 m²/g et comprend une deuxième zone distincte de la première zone, ladite deuxième zone consistant en un matériau composite comprenant un liant et du noir de carbone.

2. Pile selon la revendication 1, dans laquelle la matrice carbonée est composée majoritairement voire exclusivement de fibres de carbone enchevêtrées.

3. Pile selon la revendication 1 ou 2, dans laquelle les fibres de carbone présentent une longueur inférieure à 20 mm et un diamètre inférieur à 15 µm.

4. Pile selon l'une quelconque des revendications précédentes, dans laquelle la matrice carbonée répond à l'une ou plusieurs des caractéristiques suivantes :
- un grammage inférieur ou égal à 20 g/m² ;
- lorsque la matrice se présente sous forme d'une plaque, une épaisseur inférieure à 1 mm, de préférence inférieure à 0,5 mm ;
- la matrice carbonée est dénuée de liant polymérique.

5. Pile selon l'une quelconque des revendications précédentes, dans laquelle la matrice carbonée est autosupportée.

6. Pile selon l'une quelconque des revendications précédentes, dans laquelle la matrice carbonée est munie, pour la reprise du courant, d'une ou plusieurs pièces métalliques fixée(s) à l'une des faces de la matrice par simple soudure.

7. Pile selon l'une quelconque des revendications précédentes, dans laquelle le noir de carbone est du noir d'acétylène.

8. Pile selon l'une quelconque des revendications précédentes, dans laquelle le liant est un liant polymérique appartenant à la catégorie des liants polymériques éthyléniques fluorés.

9. Pile selon l'une quelconque des revendications précédentes, dans laquelle la deuxième zone est déposée sur un collecteur de courant, qui est un feuillard ou une grille métallique.

10. Pile selon l'une quelconque des revendications précédentes, dans laquelle la première zone et la deuxième zone sont en contact l'une de l'autre.

11. Pile selon la revendication 10, dans laquelle, lorsque la deuxième zone est déposée sur un collecteur de courant, le contact entre la première zone et la deuxième zone s'établit *via* la face du collecteur du courant sur laquelle est déposée la deuxième zone.

12. Pile selon la revendication 10, dans laquelle le contact entre la première zone et la deuxième zone est établi par le fait que le matériau composite constitutif de la deuxième zone est directement déposé sur une partie de la surface de la première zone.

13. Pile selon l'une quelconque des revendications précédentes, dans laquelle le solvant oxydant est un solvant soufré, comprenant un ou plusieurs atomes de chlore, un solvant soufré non chloré ou un solvant phosphoré et éventuellement soufré comprenant un ou plusieurs atomes de chlore.

14. Pile selon la revendication 13, dans laquelle le solvant soufré comprenant un ou plusieurs atomes de chlore est choisi parmi le chlorure de thionyle (SOCl₂), le chlorure de sulfuryle (SO₂Cl₂), le dichlorure de disoufre (S₂Cl₂), le dichlorure de soufre (SCl₂).

15. Pile selon la revendication 13, dans laquelle le solvant phosphoré et éventuellement soufré comprenant un ou plusieurs atomes de chlore est choisi parmi le trichlorure de phosphoryle (POCl₃), le trichlorure de thiophosphoryle (PSCl₃).

## Patentansprüche

1. Batterie mit Flüssigkathode, enthaltend:
- eine Kalziumanode;
- einen Elektrolyten, enthaltend ein schwefelhaltiges oder/oder phosphorhaltiges oxidierendes Lösungsmittel und mindestens ein Salz;
- eine Kathode, die als aktives Material eine Verbindung enthält, die mit dem vorstehend genannten oxidierenden Lösungsmittel identisch ist;
**dadurch gekennzeichnet, dass**
die Kathode einen ersten Bereich enthält, der aus einer kohlenstoffhaltigen Matrix besteht, die verschlungene Kohlenstoffasern mit einer Porosität von mindestens 90 % und einer spezifischen Oberfläche von weniger als oder gleich 5 m²/g aufweist, sowie einen zweiten Bereich, der sich von dem ersten Bereich unterscheidet, wobei der zweite Bereich aus einem Verbundmaterial besteht, das ein Bindemittel und Ruß enthält.

2. Batterie nach Anspruch 1,
wobei die kohlenstoffhaltige Matrix hauptsächlich bzw. ausschließlich aus verschlungenen Kohlenstoffasern besteht.

3. Batterie nach Anspruch 1 oder 2,
wobei die Kohlenstofffasern eine Länge von weniger als 20 mm und einen Durchmesser von weniger als 15 µm aufweisen.

4. Batterie nach einem der vorangehenden Ansprüche,
wobei die kohlenstoffhaltige Matrix eine oder mehrere der folgenden Eigenschaften besitzt:
- ein Flächengewicht von weniger als oder gleich 20 g/m²,
- bei in Form einer Platte vorliegenden Matrix eine Dicke von weniger als 1 mm, vorzugsweise weniger als 0,5 mm,
- die kohlenstoffhaltige Matrix ist frei von polymerem Bindemittel.

5. Batterie nach einem der vorangehenden Ansprüche,
wobei die Kohlenstoffmatrix selbsttragend ist.

6. Batterie nach einem der vorangehenden Ansprüche,
wobei die kohlenstoffhaltige Matrix zur Rücknahme des Stroms mit einem oder mehreren Metallteilen ausgestattet ist, die durch einfaches Schweißen an eine der Seiten der Matrix befestigt sind.

7. Batterie nach einem der vorangehenden Ansprüche,
wobei der Ruß Acetylenruß ist.

8. Batterie nach einem der vorangehenden Ansprüche,
wobei das Bindemittel ein polymeres Bindemittel ist, das zur Kategorie der fluorierten ethylenischen polymeren Bindemittel gehört.

9. Batterie nach einem der vorangehenden Ansprüche,
wobei der zweite Bereich auf einen Stromabnehmer aufgebracht ist, der ein Band oder ein Gitter aus Metall ist.

10. Batterie nach einem der vorangehenden Ansprüche,
wobei der erste und der zweite Bereich in Kontakt miteinander stehen.

11. Batterie nach Anspruch 10,
wobei der zweite Bereich auf einen Stromabnehmer aufgebracht ist, wobei der Kontakt zwischen dem ersten Bereich und dem zweiten Bereich über diejenige Seite des Stromabnehmers hergestellt wird, auf der der zweite Bereich aufgebracht ist.

12. Batterie nach Anspruch 10,
wobei der Kontakt zwischen dem ersten Bereich und dem zweiten Bereich dadurch hergestellt wird, dass das Verbundmaterial, das den zweiten Bereich bildet, direkt auf einen Teil der Oberfläche des ersten Bereichs aufgebracht ist.

13. Batterie nach einem der vorangehenden Ansprüche,
wobei das oxidierende Lösungsmittel ein schwefelhaltiges Lösungsmittel, das ein oder mehrere Chloratome enthält, ein nicht chloriertes schwefelhaltiges Lösungsmittel oder ein phosphorhaltiges und gegebenenfalls schwefelhaltiges Lösungsmittel mit einem oder mehreren Chloratomen ist.

14. Batterie nach Anspruch 13,
wobei das schwefelhaltige Lösungsmittel, das ein oder mehrere Chloratome enthält, ausgewählt ist aus Thionylchlorid (SOCl₂), Sulfurylchlorid (SO₂Cl₂), Dischwefeldichlorid (S₂Cl₂), Schwefeldichlorid (SCl₂).

15. Batterie nach Anspruch 13,
wobei das phosphorhaltige und gegebenenfalls schwefelhaltige Lösungsmittel, das ein oder mehrere Chloratome enthält, ausgewählt ist aus Phosphoryltrichlorid (POCl₃), Thiophosphoryltrichlorid (PSCl₃).

## Claims

1. Liquid cathode cell comprising:
- a calcium anode;
- an electrolyte comprising a sulfur and/or phosphorus oxidizing solvent and at least one salt;
- a cathode comprising a compound identical to the aforementioned oxidizing solvent as active material;
**characterized in that** the cathode comprises a first zone consisting of a carbon matrix comprising entwined carbon fibers having a porosity of at least 90% and a specific surface area of less than or equal to 5 m²/g, and comprising a second zone distinct from the first zone, wherein the second zone consists of a composite material comprising a binder and carbon black.

2. Cell according to claim 1, wherein the carbon matrix is composed predominantly or exclusively of entwined carbon fibers.

3. Cell according to claim 1 or 2, wherein the carbon fibers have a length less than 20 mm and a diameter less than 15 µm.

4. Cell according to any one of the preceding claims, wherein the carbon matrix meets one or more of the following characteristics:
- a grammage less than or equal to 20 g/m²;
- the matrix is in the form of a plate with a thickness of less than 1 mm, preferably less than 0.5 mm;
- the carbon matrix is devoid of polymeric binder.

5. Cell according to any one of the preceding claims, wherein the carbon matrix is self-supporting.

6. Cell according to any one of the preceding claims, wherein the carbon matrix is provided with one or more metal parts attached to one of the faces of the matrix by simple welding for the recovery of the current.

7. Cell according to any one of the preceding claims, wherein the carbon black is acetylene black.

8. Cell according to any one of the preceding claims, wherein the binder is a polymeric binder belonging to the category of fluorinated ethylenic polymeric binders.

9. Cell according to any one of the claims wherein the second zone is deposited on a current collector, which is a strip or a metal gate.

10. Cell according to any one of the preceding claims, wherein the first zone and the second zone are in contact with each other.

11. Cell according to claim 10, wherein, when the second zone is deposited on a current collector, the contact between the first zone and the second zone is established via the face of the collector of the current on which the second zone is deposited.

12. Cell according to claim 10, wherein the contact between the first zone and the second zone is established by the composite material constituting the second zone being directly deposited on a portion of the surface of the first zone.

13. Cell according to any one of the preceding claims, wherein the oxidizing solvent is a sulfur-containing solvent comprising one or more chlorine atoms, a non-chlorinated sulfur solvent or a phosphorus and optionally sulfur-containing solvent comprising one or more chlorine atoms.

14. Cell according to claim 13, wherein the sulfur-containing solvent comprising one or more chlorine atoms is selected from thionyl chloride (SOCl₂), sulfuryl chloride (SO₂Cl₂), disulfur dichloride (S₂Cl₂), and sulfur dichloride (SCl₂).

15. Cell according to claim 13, wherein the phosphorus and optionally sulfur-containing solvent comprising one or more chlorine atoms is selected from phosphoryl trichloride (POCl₃), thiophosphoryl trichloride (PSCl₃).
